**Europäisches Patentamt**

**European Patent Office**

**Office européen des brevets**

(19)

(11) Numéro de publication: **0 105 837**
**B1**

# (12) FASCICULE DE BREVET EUROPEEN

(45) Date de publication du fascicule du brevet:
**03.06.87**

(51) Int. Cl.⁴: **G 06 F 7/62**

(21) Numéro de dépôt: **83810414.9**

(22) Date de dépôt: **15.09.83**

---

(54) **Circuit de comptage non-linéaire.**

---

(30) Priorité: **24.09.82 FR 8216259**

(43) Date de publication de la demande:
**18.04.84 Bulletin 84/16**

(45) Mention de la délivrance du brevet:
**03.06.87 Bulletin 87/23**

(84) Etats contractants désignés:
**CH DE FR GB LI**

(56) Documents cités:
**FR - A - 1 365 227**
**FR - A - 2 122 188**
**US - A - 3 600 560**
**US - A - 3 866 024**
**US - A - 3 930 144**

(73) Titulaire: **ASULAB S.A., Faubourg du Lac 6,
CH-2502 Bienne (CH)**

(72) Inventeur: **Wattenhofer, Jean-Pierre, Ch. de
Belleroche 3, CH-2000 Neuchatel (CH)**

(74) Mandataire: **Barbeaux, Bernard et al, ICB Ingénieurs
Conseils en Brevets SA Faubourg du Lac 6,
CH-2501 Bienne (CH)**

## Description

La présente invention concerne un circuit de comptage non-linéaire.

De façon plus précise l'invention concerne un circuit qui reçoit à son entrée un certain nombre (P) d'impulsions et qui délivre à sa sortie un nombre (N), par exemple sous forme binaire, avec N = f(p), f étant une fonction continue non-linéaire.

Un tel circuit peut avoir de nombreuses applications. Par exemple il peut être introduit dans un ensemble de calcul pour engendrer des fonctions non-linéaires d'une variable d'entrée. Il peut également être utilisé dans les circuits électroniques associés à des capteurs de mesure qui délivrent une information sous la forme d'une fréquence. Ce circuit sert alors, par exemple, à linéariser l'information délivrée lorsque le capteur ne donne pas à sa sortie une fréquence qui est effectivement une fonction linéaire de la valeur de la grandeur mesurée par le capteur. Il peut encore être utilisé dans certains systèmes de compensation en température de la fréquence d'une base de temps constituée essentiellement par un résonateur à quartz, et dans lesquels l'information de température servant à réaliser la compensation est fournie sous la forme d'un signal dont la fréquence est une fonction sensiblement linéaire de la température. On sait en effet que la fréquence délivrée par un résonateur à quartz est le plus souvent une fonction sensiblement quadratique de la température. Pour effectuer la compensation en fréquence il faut donc calculer le carré de la fréquence délivrée par le senseur de température.

Une solution connue et ancienne pour résoudre ce type de problèmes se trouve dans le brevet FR 1 365 227 qui concerne un procédé et un dispositif pour transformer des valeurs de mesure fournies par un capteur suivant une fonction déterminée. Dans ce cas, les impulsions qui représentent chaque valeur mesurée et qui proviennent d'un convertisseur analogique/digital associé au capteur sont appliquées à l'entrée d'un premier compteur qui coopère avec un deuxième branché à sa suite et comptant par exemple une impulsion sur dix pour attaquer une matrice à diodes et résistances dont les sorties sont reliées à une troisième compteur par l'intermédiaire d'un appareil à fiches interchangeable qui effectue la transformation désirée et qui peut être seul ou sélectionné parmi d'autres au moyen d'un système de commutation.

Une autre solution plus récente mais qui ne convient que pour linéariser une fonction est décrite dans le brevet US 3 930 144. Elle consiste à introduire tout d'abord la valeur à transformer dans un compteur réversible et à appliquer ensuite à l'entrée de décomptage de ce dernier des impulsions de différentes fréquences pendant des intervalles de temps prédéterminés jusqu'à ce que le nombre de ces impulsions coïncide avec la valeur mémorisée.

Une autre possibilité encore c'est de faire appel à un microprocesseur programmé pour effectuer la transformation voulue mais cette solution devient trop complexe et donc trop onéreuse lorsque la fonction à réaliser est relativement simple et lorsqu'elle est toujours la même ou se présente sous un nombre très réduit de forme.

Par contre, celle que l'on trouve dans le brevet FR 2 122 188 est beaucoup mieux adaptée à cette situation. Le générateur de fonction qui fait l'objet de ce brevet comprend un premier compteur, programmable, qui reçoit sur son entrée des impulsions dont la fréquence est réprésentative de la pente de la droite à laquelle la fonction que l'on veut transformer peut être assimilée dans un certain domaine et qui incrémente un second compteur chaque fois qu'il a reçu un nombre déterminé d'impulsions si bien que l'évolution dans le temps du contenu de ce second compteur est une autre fonction linéaire mais de pente différente. La modification de cette pente, qui permet de générer une fonction non-linéaire, se fait en mettant le premier compteur dans un état initial correspondant à une valeur différente de zéro chaque fois qu'il recommence à compter, ce qui revient à changer sa capacité après que le contenu de second compteur a atteint une valeur déterminée. Ceci est réalisé au moyen d'un décodeur qui reçoit les digits les plus significatifs de la sortie du second compteur et d'une matrice-diode.

L'invention telle qu'elle est caractérisée a principalement pour but de fournir un circuit de comptage qui permette, comme ce générateur, de mettre en œuvre des fonctions non-linéaires avec une bonne précision tout en ayant une structure relativement simple.

Pour atteindre ce but le circuit de comptage non-linéaire selon l'invention comprend n circuits diviseurs recevant chacun sur son entrée les impulsions à compter, chaque circuit diviseur divisant respectivement par des nombres entiers $K_1$, $K_2$, ..., $K_n$ le nombre d'impulsions appliquées à son entrée, pour délivrer sur sa sortie un signal de comptage chaque fois qu'il a compté respectivement $K_1$, $K_2$, ..., $K_n$ impulsions; un compteur dont l'état à chaque instant est égal au nombre représentatif de la valeur de la fonction non-linéaire pour le nombre d'impulsions déjà appliquées à l'entrée du circuit de comptage; des premiers moyens de sélection commandables pourrelier la sortie d'un des circuits diviseurs à l'entrée du compteur en réponse à un premier signal de sélection; n-1 moyens de décodage pour comparer l'état du compteur à un parmi n-1 nombres entiers $k_1$, $k_2$, ..., $k_{n-1}$ et pour émettre un signal de décodage lorsque l'état du compteur est égal à l'un desdits nombres; des moyens de commande sensibles au signal de décodage pour élaborer à l'apparition de chaque signal de décodage le premier signal de sélection appliqué aux premiers moyens de sélection et un deuxième signal de sélection; et des deuxième moyens de sélection commandables en réponse au deuxième signal de sélection pour relier la sortie d'un des circuits de décodage à l'entrée des moyens de commande, la sélection du circuit diviseur et du circuit de décodage particulier étant définie à chaque fois selon ladite fonction non-linéaire à mettre en œuvre.

Comme on pourra mieux s'en rendre compte par la suite, si l'on compare un tel circuit de comptage au générateur de fonction du brevet FR 2 122 188 on constate qu'ils utilisent le même principe mais que le premier compteur du générateur est remplacé par n circuits diviseurs et un premier sélecteur, que le décodeur unique est remplacé par plusieurs, plus simples, et que la matrice-diode fait place à un circuit de commande qui agit non seulement sur l'ensemble de comptage formé par les n diviseurs et le premier sélecteur en commandant celui-ci mais aussi sur le système de décodage en contrôlant le second sélecteur.

Ainsi et contrairement à l'impression que l'on pourrait avoir, on aboutit à un circuit plus facile à réaliser que le circuit connu et prenant moins de place sur une puce lorsqu'il est intégré, ceci notamment grâce à l'absence de compteur programmable et d'une mémoire dont la capacité augmente très vite en fonction de celle des compteurs auxquels elle est associée.

L'invention sera mieux comprise à la lecture de la discription qui suit de plusieurs modes de réalisation donnés à titre d'exemples non limitatifs. Cette description se réfère au dessin annexé sur lequel:

la figure 1 est un schéma très général du circuit de comptage non-linéaire selon l'invention;

les figures 2a et 2b illustrent deux types de fonction continue qu'il est possible de mettre en oeuvre grâce au circuit de comptage selon l'invention;

la figure 3 montre sous une forme plus détaillée un mode de réalisation du circuit de comptage pour la mise en oeuvre d'une fonction du type représenté sur la figure 2a;

les figures 4a à 4c illustrent en détails un mode particulier de réalisation du circuit de la figure 3 dans le cas où la fonction à réaliser est continûment croissante.

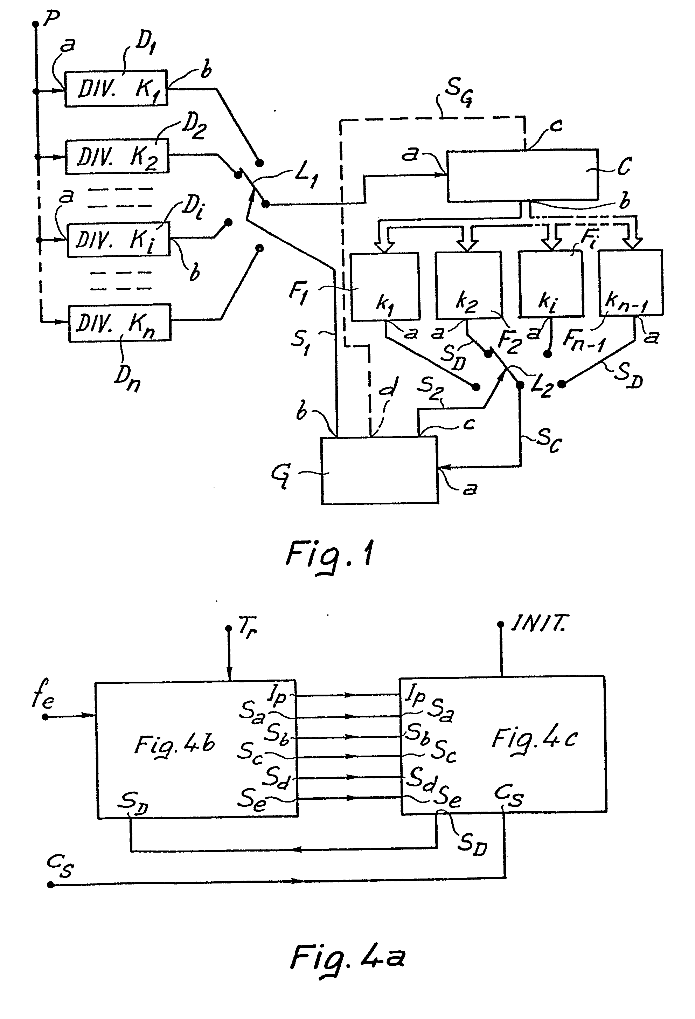

Comme le montre la figure 1, le circuit de comptage comprend tout d'abord n circuits diviseurs référencés respectivement $D_1$, $D_2$, ..., $D_i$, ..., $D_n$ comportant chacun une entrée d'horloge a et une sortie b. Chaque diviseur $D_i$ reçoit sur son entrée a les impulsions p à compter. Chaque diviseur $D_i$ divise le nombre d'impulsions reçues sur son entrée respectivement par les nombres entiers $K_1$, $K_2$, ..., $K_n$. En d'autres termes le diviseur $D_i$ délivre sur sa sortie b une impulsion à chaque fois que $K_i$ impulsions ont été appliquées à son entrée a. Le circuit de comptage comporte également un compteur référencé C qui comprend une entrée d'horloge a et des sorties d'état portant la référence globale b. Un premier sélecteur $L_1$ commandable permet de relier, en réponse à un signal de commande, la sortie b d'un des diviseurs $D_i$ à l'entrée d'horloge a du compteur C.

Pour simplifier la figure, le sélecteur $L_1$ a été représenté sous la forme d'un contacteur mobile. Bien entendu il s'agit simplement d'une représentation symbolique, comme cela apparaître ultérieurement. Les sorties d'état b du compteur C sont reliées à des décodeurs portant respectivement les références $F_1$, ..., $F_i$, ..., $F_{n-1}$ qui comparent l'état du compteur C à des nombres entiers respectivement $k_1$, ..., $k_i$, ..., $k_{n-1}$. Les décodeurs $F_i$ délivrent sur leurs sorties a un signal de décodage $S_D$ lorsque le contenu du compteur C est égal au nombre $k_i$. Le circuit de comptage non-linéaire comprend enfin un ensemble de commande portant la référence générale G. L'entrée a de l'ensemble de commande G est reliée aux sorties a des décodeurs $F_i$ par l'intermédaire d'un deuxième sélecteur référencé $L_2$ qui délivre un signal de commande $S_C$ chaque fois qu'un signal de décodage $S_D$ apparaît sur la sortie sélectionnée. L'ensemble de commande G comporte une première sortie b par laquelle il peut émettre un premier signal de sélection $S_1$ en réponse à l'application d'un signal de décodage $S_D$ (fig. 4a) sur son entrée a. Ce premier signal de sélection $S_1$ sert à commander la position du sélecteur $L_1$ c'est-à-dire à déterminer quel diviseur $D_i$ doit être relié au compteur C. L'ensemble de commande G comporte une deuxième sortie c sur laquelle il peut émettre un deuxième signal de sélection $S_2$ en réponse à l'apparition d'un signal de commande $S_C$ (fig. 4a). Ce signal $S_2$ sert à commander le sélecteur $L_2$ c'est-à-dire à définir celui des décodeurs $F_i$ qui doit être relié à l'entrée a de l'ensemble de commande G.

Le fonctionnement du circuit représenté sur la figure 1 est le suivant. Initialement, et avant le début de l'application des impulsions p, les diviseurs $D_i$ et le compteur C sont remis à zéro. Les sélecteurs $L_1$ et $L_2$ sont placés dans une position initiale adéquate correspondant au début de la non-linéarité à mettre en oeuvre. Puis les impulsions p sont appliquées aux entrées des diviseurs $D_i$. On suppose que c'est le diviseur $D_2$ qui est relié à l'entrée du compteur C et que c'est le décodeur $F_2$ qui est relié à l'entrée a de l'ensemble de commande G. Le diviseur $D_2$ émet un signal à chaque fois que $K_2$ impulsions sont appliquées à son entrée. Les impulsions délivrées par le diviseur $D_2$ incrémentent le compteur C. Le contenu du compteur C est comparé en permanence aux nombres $k_i$. Lorsque le contenu du compteur C devient égal au nombre $k_2$ une impulsion de commande $S_C$ est appliquée à l'entrée a de l'ensemble de commande G. Alors, l'ensemble de commande émet un nouveau signal de sélection $S_1$ pour relier un autre diviseur $D_i$ à l'entrée du compteur C et un nouveau signal de sélection $S_2$ pour relier un nouveau décodeur $F_i$ à l'entrée à de l'ensemble de commande. Les signaux délivrés par le diviseur relié à l'entrée du compteur C continuent à incrémenter ce compteur jusqu'à ce que son contenu devienne égal au nombre $k_i$ associé au décodeur relié à l'entrée de l'ensemble de commande G. Des cycles semblables se répètent jusqu'à ce que la totalité des impulsions p ait été appliquée aux entrées des diviseurs $D_i$. A cet instant le contenu N du compteur C représente la valeur numérique de la fonction non-linéaire (f) associée au circuit pour la valeur de la variable p égale du nombre total d'impulsions appliquées à l'entrée du circuit.

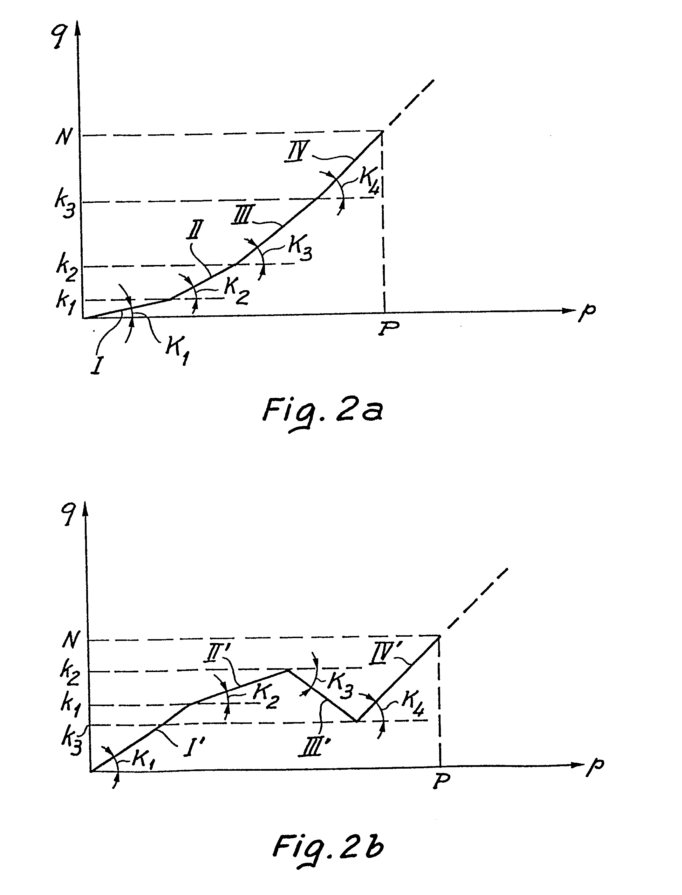

La figure 2a permet de mieux expliquer le principe du fonctionnement du circuit dans le cas où le graphe de la non-linéarité à réaliser est une courbe continue à dérivée croissante.

Selon le principe du circuit de l'invention, le graphe de la non-linéarité mise en oeuvre par le circuit est approximé par une succession de segments de droite référencés. I, II, III et IV. Le graphe de la figure 2a représente le contenu q du compteur C en fonction du nombre des impulsions p appliquées successivement à l'entrée du circuit de comptage. Le premier segment I est décrit dans la première phase exposée précédemment. Dans l'exemple particulier considéré le premier signal de sélection $S_1$ commande initialement le sélecteur $L_1$ pour que la sortie du diviseur $D_1$ soit reliée à l'entrée du compteur C et le signal $S_2$ commande le sélecteur $L_2$ pour que le comparateur $F_1$ soit relié à l'entrée a de l'ensemble de commande G. Pendant ce premier cycle ou phase, on décrit le segment I jusqu'à ce que le décodeur $F_1$ délivre un signal de décodage $S_D$. A cet instant un nouveau signal de sélection $S_1$ relie la sortie du diviseur $D_2$ à l'entrée du compteur C et un nouveau signal $S_2$ relie la sortie du décodeur $F_2$ à l'entrée a de l'ensemble de commande. Dans cette deuxième phase on décrit le segment II jusqu'à ce que le décodeur $F_2$ délivre à nouveau un signal de décodage $S_D$. Dans la troisième phase correspondant au segment III le diviseur non resprésenté $D_3$ est relié au compteur C et le décodeur non représenté $F_3$ est relié à l'entrée de l'ensemble de commande G. Puis dans la dernière phase, correspondant à la portion IV c'est la sortie du diviseur $D_4$ qui est reliée à l'entrée du compteur C et le décodeur $F_4$ qui est relié à l'entrée de l'ensemble de commande G. Lorsque la totalité des impulsions p (nombre P) a été appliquée à l'entrée des diviseurs, le compteur C n'est plus incrémenté et son contenu final N représente la valeur numérique de la fonction non-linéaire (f) considérée pour la valeur P de la variable p.

On voit qu'ainsi chaque segment est défini par un couple de nombres respectivement $K_i$ donné par les diviseurs $D_i$ et qui fixe la pente du segment et un nombre $k_i$ fourni par un décodeur $F_i$ qui fixe directement par soustractions successives ($k_i$–$k_{i-1}$) la «longueur» du segment. Ces couples de valeur $K_i$ et $k_i$ sont appliqués successivement aux sélecteurs $L_1$ et $L_2$ à partir des informations contenues dans l'ensemble de commande G et appliquées aux sélecteurs sous la forme des signaux de sélection $S_1$ et $S_2$. On voit cependant dès à présent que dans l'exemple considéré ce sont des diviseurs consécutifs qui doivent être reliés successivement à l'entrée du compteur et que ce sont également des décodeurs consécutifs qui doivent être reliés à l'entrée de l'ensemble de commande. Il apparaît ainsi que l'information contenue dans l'ensemble de commande G est très simple puisqu'elle consiste en des pas successifs pour commander les déplacements des sélecteurs. On conçoit aisément que dans un mode de réalisation concret servant à élaborer une fonction du type représenté sur la figure 2a l'ensemble de commande G et les sélecteurs $L_1$ et $L_2$ pourront avoir une structure très simple.

La figure 2b illustre un mode de commande du circuit qui permet de mettre en oeuvre une non-linéarité dont la courbe représentative présente une dérivée qui change de signe. Par exemple sur la figure 2b on trouve un premier segment I' et un deuxième segment II' qui présentent tous les deux une pente positive puis un segment III' qui présente une pente négative et enfin un quatrième segment IV' qui présente à nouveau une pente positive.

Pour pouvoir mettre en œuvre une telle fonction le circuit de comptage comporte un compteur C qui peut être commandé en comptage et en décomptage. Le compteur une entrée de commande supplémentaire référencée c qui reçoit un signal de signe $S_G$ délivré par une sortie d de l'ensemble de commande G. En l'absence du signal $S_G$ le compteur C est incrémenté par les impulsions qui sont appliquées à son entrée d'horloge a. Au contraire lorsqu'un signal de signe $S_G$ est appliqué sur l'entrée c du compteur C, celui-ci est décrémenté par les impulsions appliquées sur son entrée d'horloge a. On comprend que lorsque le signal $S_G$ est appliqué au compteur C on réalise ainsi un segment à pente négative. On voit également que, dans le cas où il existe un segment à pente négative, les valeurs successives de décodage $k_1$, $k_2$, $k_3$ n'ont pas des valeurs successives croissantes. Dans ce mode de fonctionnement l'ensemble de commande G commande successivement la mise en œuvre du diviseur $D_1$ et du décodeur $F_1$, puis celle du diviseur $D_2$ et du décodeur $F_2$ pour décrire les segments I' et II'. A ce stade, l'ensemble de commande G délivre sur sa sortie d un signal de signe $S_G$ qui met en position de décomptage le compteur C. Par ailleurs les signaux $S_1$ et $S_2$ commandent la mise en service du diviseur $D_3$ et du décodeur $F_3$. Les impulsions délivrées par le diviseur $D_3$ décrémentent le contenu du compteur C jusqu'à ce que ce contenu devienne égal à la valeur $k_3$ qui est inférieure à la valeur $k_2$. A ce moment l'ensemble de commande G ne délivre plus de signal de signe $S_G$ et le compteur C compte à nouveau les impulsions appliquées à son entrée d'horloge a. Simultanément il délivre un signal de sélection $S_1$ pour mettre en service le diviseur $D_4$. Comme on l'a déjà compris aucun décodeur $F_i$ ne doit être mis en service puisque le système s'arrêtera dès que la totalité des impulsions p aura été appliquée à l'entrée des diviseurs. Cependant, par sécurité, on peut prévoir de mettre en œuvre un décodeur, par exemple $F_4$, associé à un nombre $k_4$ dont la valeur est égale au contenu maximal du compteur C. Ainsi, si accidentellement le nombre d'impulsions P est supérieur à la capacité du compteur C, le fonctionnement du circuit est arrêté.

Il est important de préciser que si l'un des segments à mettre en œuvre a une pente égale à 1, bien entendu, on n'utilisera pas de diviseur de valeur 1, mais une des bornes d'entrée du sélecteur $L_1$ recevra directement les impulsions p.

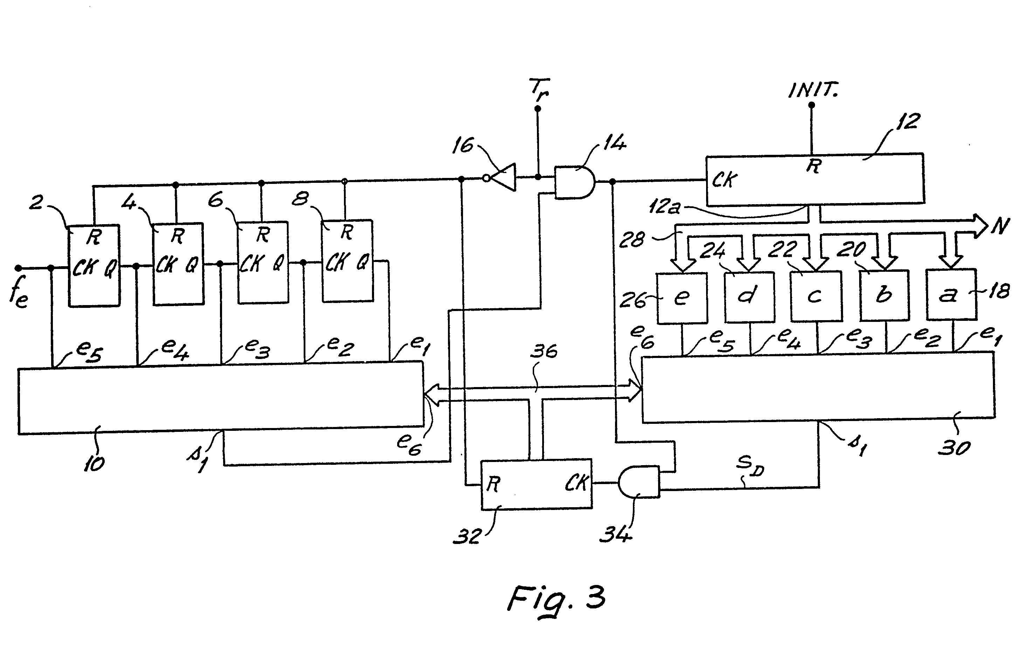

La figure 3 donne sous une forme plus détaillée un mode de réalisation du circuit de comptage dans le cas où la non-linéarité a la forme représentée sur la figure 2a et où, de plus, les nombres entiers, c'est-à-dire les inverses des pentes, $K_1$, $K_2$, ..., $K_5$ valent respectivement 16, 8, 4, 2 et 1. Plus généralement on passe d'une pente à la suivante en multipliant la précédente par deux. On appelera a, b, c, et d les valeurs correspondantes des nombres $k_1$, ..., $k_4$. En outre dans le mode de réalisation représenté sur la figure 3 le circuit de comptage sert à élaborer une fonction non-linéaire de la fréquence d'un signal périodique à fréquence constante. Pour cela on applique un signal de fréquence $f_e$ à l'entrée du circuit pendant une durée $T_r$. On voit donc qu'en fait cela est équivalent à appliquer un certain nombre d'impulsions ($f_e \times T_r$) ainsi que cela a été décrit en liaison avec la figure 1.

Le circuit comprend tout d'abord quatre étages de division binaire référencés respectivement 2, 4, 6 et 8. Chaque étage comporte une entrée d'horloge CK, une sortie directe Q et une entrée de remise à zéro R. La sortie Q d'un étage de division est reliée à l'entrée CK de l'étage suivant. L'entrée CK du premier compteur binaire 2 reçoit le signal de fréquence $f_e$. Les sorties Q des étages de comptage binaire sont reliées aux entrées $e_1$, $e_2$, $e_3$ et $e_4$ d'un multiplexeur 10. En outre le signal de fréquence $f_e$ est directement appliqué à l'entrée $e_5$ du multiplexeur 10. Le multiplexeur 10 comporte également une entrée de commande $e_6$ et une sortie $s_1$. Le circuit de comptage comporte encore un compteur binaire 12 dont l'entrée d'horloge CK est reliée à la sortie $s_1$ du multiplexeur 10 par l'intermédiaire d'une porte ET référencée 14. La porte 14 reçoit sur une deuxième entrée un signal de période de référence $T_r$. En d'autres termes la porte 14 est ouverte pendant la durée $T_r$. Le signal $T_r$ est également appliqué aux entrées de remise à zéro R des étages de division de binaire 2 à 8 par l'intermédiaire d'un inverseur 16. Le circuit de comptage comporte également des comparateurs 18, 20, 22, 24 et 26 qui comparent un nombre binaire appliqué à leurs entrées respectivement aux nombres a, b, c, d et e. Les entrées des comparateurs sont reliées à la sortie d'état 12a du compteur 12 par un BUS 28. En conséquence chaque comparateur 18 à 26 reçoit en permanence sur son entrée l'état, c'est-à-dire le contenu, du compteur 12. Les sorties des comparateurs 18 à 26 sont reliées aux entrées $e_1$ à $e_5$ d'un deuxième multiplexeur référencé 30. Ce multiplexeur comporte également une entrée de commande $e_6$ et une sortie $s_1$. La sortie $s_1$ du multiplexeur 30 est reliée à l'entrée d'horloge CK d'un compteur de pointage référencé 32 par l'intermédiaire d'une porte ET référencée 34. Une deuxième entrée de la porte 34 reçoit le signal délivré par la porte 14. L'état du compteur de pointage 32 est appliqué en permanence aux entrées de commande $e_6$ respectivement des multiplexeurs 10 et 30 par un BUS 36. Enfin la sortie de l'inverseur 16 est reliée à l'entrée de remise à zéro R du compteur de pointage 32.

La correspondance entre les éléments de la figure 3 et ceux de la figure 1 est apparente pour l'homme de l'art. Les sorties Q des compteurs binaires 2 à 8 correspondent aux sorties des diviseurs $D_i$; le multiplexeur 10 correspond au sélecteur $L_1$; le compteur 12 correspond au compteur C; les comparateurs 18 à 26 correspondent aux décodeurs $F_i$; le multiplexeur 30 correspond au sélecteur $L_2$; et le compteur de pointage 32 correspond à l'ensemble de commande G.

Le fonctionnement du circuit de la figure 3 se déduit aisément des explications précédentes. Avant que ne commence le comptage, c'est-à-dire lorsque le signal $T_r$ vaut zéro, la porte 14 est bloquée et un signal de niveau logique 1 est appliqué sur les l'entrée de remise à zéro des compteurs binaires 2 à 8 ainsi que sur l'entrée de remise à zéro du compteur de pointage 32. En outre, préalablement, un signal d'initialisation INIT à été appliqué sur l'entrée de remise à zéro R du compteur 12 dont le contenu est donc remis à zéro. Le compteur de pointage 32 applique sur les entrées de commande $e_6$ des multiplexeurs 10 et 30 la valeur de commande zéro ce qui a pour effet de relier les entrées $e_1$ des multiplexeurs 10 et 30 à la sortie $s_1$ de ces mêmes multiplexeurs. Au début du comptage, c'est-à-dire lorsque le signal $T_r$ passe au niveau logique haut, la porte 14 est débloquée et le signal de remise à zéro n'est plus appliqué aux étages de division 2 à 8 ni au compteur 32. Les impulsions du signal de fréquence $f_e$ sont appliquées aux étages successifs de division par deux. A chaque fois que seize impulsions ont été appliquées le compteur 8 délivre une impulsion qui incrémente le compteur 12 d'une unité. Lorsque l'état du compteur 12 devient égal à la valeur a, une impulsion apparaît sur la sortie $s_1$ du multiplexeur 30. Cette impulsion est appliquée à l'entrée CK du compteur de pointage 32 à travers la porte de synchronisation 34. La valeur 1 est donc appliquée aux entrées de commande $e_6$ des multiplexeurs 10 et 30. Cela a pour effet de relier l'entrée $e_2$ des multiplexeurs à leur sortie $s_1$. A chaque fois que huit impulsions du signal de fréquence $f_e$ ont été appliquées aux étages de division 2 à 8 une impulsion est appliquée à l'entrée du compteur 12. Le cycle se répète pour les valeurs b, c et d de comparaison. A partir du décodage de la valeur d, c'est directement le signal de fréquence $f_e$ qui incrémente le compteur 12. Durant cette phase au plus tard le signal de période de référence $T_r$ repasse à l'état zéro ce qui bloque la porte 14 et le compteur 12 n'est plus incrémenté. Simultanément les étages de division 2 à 8 et le compteur 32 sont remis à zéro. Comme cela a déjà été expliqué l'état du compteur 12 est alors égal à la valeur numérique de la fonction non-linéaire de la fréquence $f_e$. Si la période de réfé-

rence $T_r$ est accidentellement trop longue, le compteur 12 risque d'avoir un état égal à sa capacité maximale avant que le signal $T_r$ ne retombe au niveau logique zéro. Dans ce cas le comparateur 26 décode cet état du compteur ce qui arrête le fonctionnement du circuit.

Si l'on compare le circuit de la figure 3 à celui de la figure 1 on voit aisément que les signaux $S_1$ et $S_2$ de sélection, qui correspondent aux valeurs numériques appliquées successivement sur les entrées $e_6$ des multiplexeurs, ont tous les deux la même valeur. On peut noter également que la sortie $s_1$ du multiplexeur 30 délivre le signal référencé $S_D$ sur la figure 1.

Les figures 4a à 4c représentent plus en détail un mode de réalisation du circuit de comptage de la figure 3. Quant au fonctionnement, la seule différence réside dans le fait qu'il est prévu de plus un signal de commande référencé $C_S$ qui permet de comparer le contenu du compteur 12 à deux séries de nombres c'est-à-dire aux nombres a à e comme dans le cas de la figure 3 et également à des nombres a' à e' selon la valeur logique du signal de commande $C_S$.

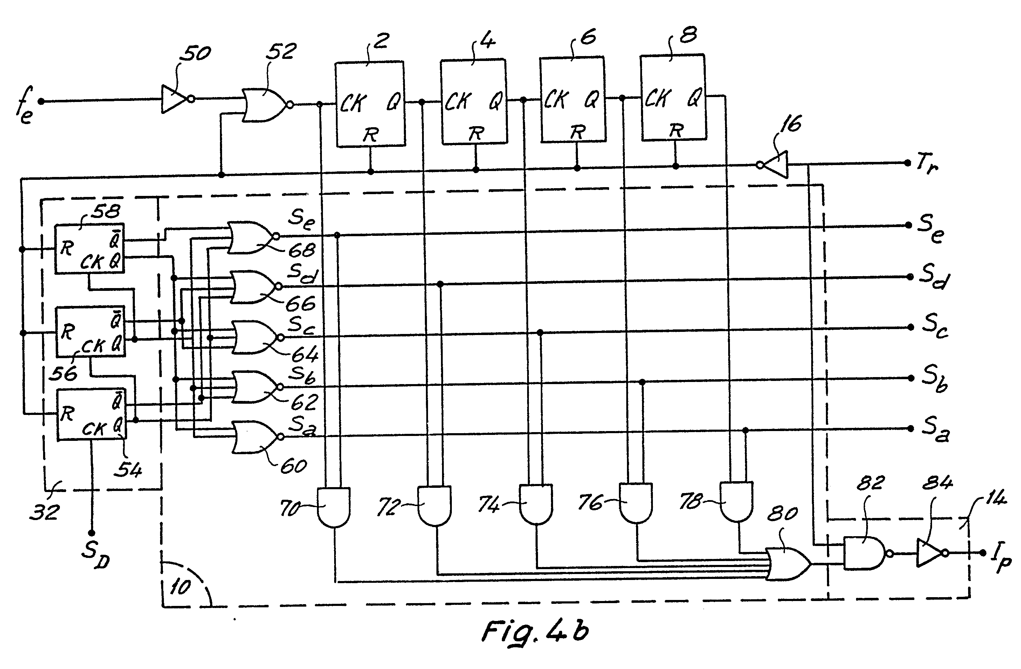

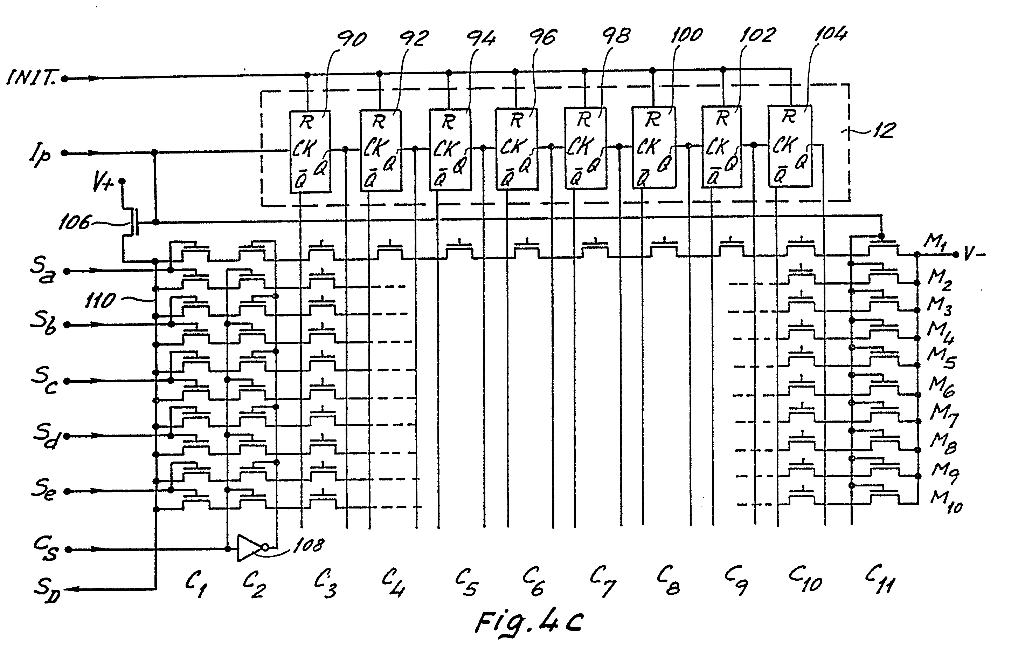

Afin de rendre la lecture des figures plus simple l'ensemble du circuit a été partagé en deux figures (figure 4b et figure 4c) la figure 4a montrant la façon dont il faut assembler les deux figures 4b et 4c.

La figure 4b montre que le signal de fréquence $f_e$ attaque l'entrée d'horloge du premier étage de division binaire 2 à travers un inverseur 50 et une porte NON OU référencée 52. Les entrées de remise à zéro R des étages de division 2 à 8 sont attaquées par le signal $T_r$ par l'intermédiaire de l'inverseur 16. Le signal $T_r$ inversé est également appliqué à la deuxième entrée de la porte NON OU 52. Ainsi la porte 52 n'est ouverte que pendant que le signal $T_r$ est au niveau logique haut. Sur cette figure on a représenté les étages de division binaire 54, 56 et 58 constituant le compteur de pointage 32 de la figure 3. Plus généralement le nombre de ces étages de division doit être adapté au nombre de segments qui représentant la fonction non-linéaire à mettre en œuvre. L'entrée d'horloge CK de l'étage de division 54 reçoit le signal $S_D$. La sortie Q de chaque étage de division attaque l'entrée d'horloge de l'étage suivant. En outre le signal $T_r$ inversé est appliqué à l'entrée de remise à zéro R des étages de division 54 à 58. Les sorties Q et $\bar{Q}$ sont reliées aux entrées de portes NON OU à trois entrées, ces portes étant référencées 60, 62, 64, 66 et 68. Les liaisons sont telles que, lorsque le compteur 32 est à la valeur zéro, c'est-à-dire lorsque tous les étages de division 54 à 58 sont à l'état zéro, un signal de niveau logique haut apparaît à la sortie de la porte 60 alors que les autres portes 62 à 68 délivrent un signal logique de niveau bas. De même lorsque le contenu du compteur 32 est égal à 1 c'est-à-dire lorsque l'étage de division 54 a un contenu égal à 1 alors que les étages de division 56 et 58 sont à zéro, la porte 62 délivre un signal de niveau logique haut alors que les portes 60, 64, 66 et 68 délivrent un signal logique de niveau bas. Plus généralement on aura compris que les portes logiques 60 à 68 délivrent respectivement un signal logique haut lorsque le contenu du compteur 32 vaut respectivement 0, 1, 2, 3 et 4.

Le circuit de comptage des figures 4a et 4b comprend encore cinq portes ET référencées 70, 72, 74, 76 et 78 à deux entrées. Les entrées de la porte 70 sont reliées d'une part à la sortie de la porte 52 et d'autre part à la sortie de la porte 68. La sortie de l'étage de division 2 et la sortie de la porte 66 sont reliées aux entrées de la porte 72 etc. En outre les entrées de la porte 78 sont reliées respectivement à la sortie de l'étage de division 8 et de la porte 60. Enfin les sorties des portes ET référencées 70 à 78 sont reliées aux entrées d'une porte OU référencée 80. La sortie de la porte 80 attaque une entrée d'une porte NON ET référencée 82 qui reçoit sur son autre entrée le signal $T_r$. La sortie de la porte 82 est reliée à l'entrée d'un inverseur 84 qui délivre sur sa sortie un signal référencé $I_p$. On comprend aisément que l'ensemble des circuits 82 et 84 reconstitue la porte ET référencée 14 de la figure 3. On voit aisément que, au fur et à mesure de l'incrémentation du compteur de pointage 32, les portes 78 à 70 sont successivement déployées ce qui a pour effet de relier directement et successivement la sortie des étages de division 8, 6, 4 et 2 et la sortie de la porte 52 à l'entrée de la porte 82. Ainsi les portes 60 à 68 et 70 à 78 reconstituent l'équivalent du multiplexeur 10 de la figure 3. En outre les signaux $S_a$ à $S_e$ délivrés par les portes 60 à 68 constituent dans leur ensemble l'équivalent des signaux de sélection $S_1$ et $S_2$ de la figure 1. On rappelle que dans le mode de réalisation de la figure 3 les signaux $S_1$ et $S_2$ sont identiques.

Sur la figure 4c on a représenté plus en détail le compteur 12 de la figure 3 qui est constitué par huit étages diviseurs binaires référencés 90, 92, 94, 96, 98, 100, 102 et 104. Chaque étage de division comporte une entrée d'horloge CK, des sorties Q et $\bar{Q}$, et une entrée de remise à zéro R. L'entrée CK du diviseur 90 reçoit le signal $I_p$. Les entrées de remise à zéro sont attaquées par le signal INIT comme cela a déjà été indiqué. Dans ce mode de réalisation les décodeurs 18 à 26 et le multiplexeur 30 de la figure 3 sont réalisés dans une même structure. Cette structure consiste en un tableau de commutateurs constitués, par exemple, par des transistors MOS. Ce tableau comporte dix lignes référencées $M_1$ à $M_{10}$ et onze colonnes référencées $C_1$ à $C_{11}$. Les transistors de la colonne $C_{11}$ servent à l'alimentation des autres transistors du tableau entre les potentiels V– et V+. Cette alimentation est commandée par l'intermédiaire du transistor 106 dont la grille reçoit le signal $I_p$ tout comme la grille des transistors de la colonne $C_{11}$. Les transistors des colonnes $C_3$ à $C_{10}$ servent au décodage du contenu des différents étages de division 90 à 104. Pour cela les grilles des transistors d'une colonne sont reliées à la sortie Q ou à la sortie $\bar{Q}$ de l'étage de division 90 à 104 associé à la colonne considérée. Ces connections particulières ont été symbolisées par des lignes sortant des sorties Q et $\bar{Q}$ des

étages 90 à 104 et bordant les transistors de la colonne considérée. En outre, si l'on considère que lorsque le signal $C_S$ est au niveau logique haut on commande la comparaison aux nombres a à e et que c'est la comparaison aux nombres à' à e' qui est effectuée lorsque le signal $C_S$ est au niveau bas, les lignes de transistors $M_2$, $M_4$, $M_6$, $M_8$ et $M_{10}$ servent à décoder les nombres a à e et les lignes $M_1$ $M_3$ $M_5$ $M_7$ et $M_9$ servent à décoder les nombres a' à e'. Pour cela, si l'on considère les transistors de la colonne $C_1$, les transistors des lignes $M_1$ et $M_2$ ont leur grille qui est attaquée par le signal $S_a$, les transistors des lignes $M_3$ et $M_4$ ont leur grille attaquée par le signal $S_b$ etc. et les transistors des lignes $M_9$ et $M_{10}$ ont leur grille attaquée par le signal $S_e$.

Les transistors de la colonne $C_2$ servent à faire la distinction entre le décodage des nombres a à e et des nombres a' à e'. Pour cela le signal $C_S$ est directement appliqué aux grilles des transistors de la colonne $C_2$ disposés sur des lignes paires. Le signal $C_S$, inversé par l'inverseur 108, est appliqué aux grilles des transistors de la colonne $C_2$ disposés dans les lignes de rang impair.

Le fonctionnement de cet ensemble de décodage est très simple. Dans la première phase de comptage c'est le signal $S_a$ qui est au niveau logique haut. Si de plus le signal de commande $C_S$ est au niveau logique haut, seule la ligne $M_2$ est débloquée. Un signal $S_D$ apparaîtra donc sur la ligne 110 lorsque le contenu des étages de division 90 à 104 correspondra au nombre a c'est-à-dire à l'application d'un niveau logique haut sur la grille de la totalité des transistors de la ligne $M_2$ des colonnes $C_3$ à $C_{10}$. Il en ira successivement de même lorsqu'on appliquera les signaux de sélection $S_b$, ..., $S_e$. Si, au contraire le signal de commande $C_S$ est au niveau logique bas, ce sont les lignes de transistors de rang impair qui seront successivement débloquées.

Il découle de la description précédente que le circuit de comptage selon l'invention a une structure relativement simple puisqu'il est constitué par des portes logiques et par des étages de division binaire. De plus il peut être adapté à un grand nombre de fonctions non-linéaires, à condition que ces fonctions puissent être représentées par un nombre limité de segments.

**Revendications**

1. Circuit de comptage non-linéaire d'une pluralité d'impulsions, comprenant:

n circuits diviseurs ($D_i$) recevant sur leur entrée lesdites impulsions pour diviser respectivement par des nombres entiers $K_1$, $K_2$, ..., $K_n$ le nombre d'impulsions appliquées à leur entrée et pour délivrer respectivement sur leur sortie un signal de comptage à chaque fois qu'ils ont compté respectivement $K_1$, $K_2$, ..., $K_n$ impulsions;

un compteur (C) dont l'état à chaque instant représente la valeur de la fonction non-linéaire de comptage associée au nombre d'impulsions comptées;

des premiers moyens de sélection ($L_1$) commandables pour relier la sortie d'un desdits circuits diviseurs ($D_i$) à l'entrée dudit compteur en réponse à un premier signal de sélection ($S_1$);

n-1 moyens de décodage ($F_i$) pour comparer l'état dudit compteur (C) à n-1 nombres entiers $k_1$, $k_2$, ..., $k_{n-1}$ prédéterminés et pour émettre respectivement un signal de décodage ($S_D$) lorsque l'état dudit compteur (C) est égal à l'un desdits n-1 nombres;

un ensemble de commande (G) pour délivrer ledit premier signal de sélection ($S_1$) et un deuxième signal de sélection ($S_2$) en réponse à l'application d'un signal de décodage ($S_D$); et

des deuxièmes moyens de sélection ($L_2$) commandables pour relier la sortie d'un desdits moyens de décodage ($F_i$) à l'entrée dudit ensemble de commande (G) en réponse audit deuxième signal de sélection ($S_2$).

2. Circuit de comptage selon la revendication 1, dans lequel ledit ensemble de commande (G) comprend un compteur de pointage (32) dont l'entrée d'horloge reçoit lesdits signaux de décodage ($S_D$), et dont l'état fournit la valeur commune desdits premier et deuxième signaux de sélection ($S_1$, $S_2$), en ce que ledit premier moyen de sélection ($L_1$) comprend un premier multiplexeur (10) dont les n entrées sont reliées aux sorties des n circuits diviseurs, dont l'entrée de commande reçoit ledit premier signal de sélection ($S_1$) et dont la sortie est reliée à l'entrée dudit compteur (12), et en ce que ledit deuxième moyen de sélection comprend un deuxième multiplexeur (30) dont les n-1 entrées sont reliées aux sorties des n-1 moyens de décodage, dont l'entrée de commande reçoit ledit deuxième signal de sélection ($S_2$) et dont la sortie fournit lesdits signaux de décodage ($S_D$).

3. Circuit de comptage selon la revendication 1, dans lequel ledit compteur (C) peut être commandé en comptage et en décomptage en réponse à l'état d'un signal de commande ($S_G$) délivré par ledit ensemble de commande (G) en synchronisme avec lesdits signaux de sélection ($S_1$, $S_2$).

**Patentansprüche**

1. Nichtlineare Zählschaltung für eine Mehrzahl von Irhpulsen, umfassend

n Teilerschaltkreise ($D_i$), die an ihrem Eingang die genannten Impulse empfangen, um die Anzahl der an ihren Eingang angelegten Impulse jeweils durch ganze Zahlen $K_1$, $K_2$, ..., $K_n$ zu dividieren und zum Erzeugen an ihrem Ausgang jeweils eines Zählsignales jedes Mal dann, wenn sie $K_1$, $K_2$, ..., $K_n$ Impulse gezählt haben;

einen Zähler (C), dessen Zählstand in jedem Augenblick den Wert der nichtlinearen Funktion der Zählung, zugeordnet der Anzahl der gezählten Impulse, repräsentiert;

erste steuerbare Auswählmittel ($L_1$) zum Verbinden des Ausgangs einer der genannten Teilerschaltungen ($D_i$) mit dem Eingang des genannten Zählers im Ansprechen auf ein erstes Auswählsignal ($S_1$);

n-1 Decodiermittel ($F_i$) zum Vergleichen des Zähl-

standes des genannten Zählers (C) mit n-1 vorge-gebenen ganzen Zahlen $k_1$, $k_2$, ..., $k_{n-1}$ und zum Ausgeben jeweils eines Decodierungssignals ($S_D$), sobald der Zählstand des ganannten Zählers (C) gleich einer der genannten n-1 Zahlen ist; eine Steuerbaugruppe (G) zum Ausgeben des ge-nannten ersten Auswählsignals ($S_1$) und eines zweiten Auswählsignals ($S_2$) im Ansprechen auf das Anlegen eines Decodierungssignals ($S_D$), und zweite steuerbare Auswählmittel ($L_2$) zum Ver-binden des Ausgangs eines der genannten Deco-diermittel ($F_i$) mit dem Eingang der genannten Steuerbaugruppe (G) im Ansprechen auf das ge-nannte zweite Auswählsignal ($S_2$).

2. Zählschaltung nach Anspruch 1, bei der die genannte Steuerbaugruppe (G) einen Pointierzähler (32) umfasst, dessen Takteingang die genannten Decodierungssignale ($S_D$) empfängt und dessen Zählstand den gemeinsamen Wert der genannten ersten und zweiten Auswählsignale ($S_1$, $S_2$) liefert, bei dem die genannten ersten Aus-wählmittel ($L_1$) einen ersten Multiplexer (10) umfassen, dessen n Eingänge mit den Ausgängen der n Teilerschaltungen verbunden sind, dessen Steuereingang das genannte erste Auswählsig-nal ($S_1$) empfängt und dessen Ausgang mit dem Eingang des genannten Zählers (12) verbunden ist und bei dem die genannten zweiten Auswählmittel einen zweiten Multiplexer (30) umfassen, dessen n-1 Eingänge mit den Ausgängen der n-1 Decodiermittel verbunden sind, dessen Steuereingang das genannte zweite Auswählsignal ($S_2$) empfängt und dessen Ausgang die genannten Decodierungssignale ($S_D$) liefert.

3. Zählschaltung nach Anspruch 1, bei der der genannte Zähler (C) aufwärts und abwärts zählend steuerbar ist im Ansprechen auf den Zustand eines Steuersignals ($S_G$), geliefert von der genannten Steuerbaugruppe (G) synchron mit den genannten Auswählsignalen ($S_1$, $S_2$).

**Claims**

1. Non-linear counting circuit for a plurality of pulses comprising:
n divider circuits (Di) receiving said pulses on their input for dividing the number of pulses applied to their input respectively by integers $K_1$, $K_2$, ..., $K_n$ and for supplying respectively on their output a counting signal each time that they have counted $K_1$, $K_2$, ..., $K_n$ pulses;
a counter (C), the state of which at each instant, represents the value of the non-linear counting function associated with the number of pulses counted;
first selection means ($L_1$) controllable for coup-ling the output of one of said divider circuits ($D_i$) to the input of said counter in response to a first selection signal ($S_1$);
n-1 decoding means ($F_i$) for comparing the state of said counter (C) to n-1 predetermined integers $K_1$, $K_2$, ..., $K_{n-1}$ and for respectively emitting a decoding signal ($S_D$) when the state of said counter (C) is equal to one of said n-1 integers;
a control assembly (G) for supplying said first se-lection signal ($S_1$) and a second selection signal ($S_2$) in response to the application of a decoding signal ($S_D$); and
second selection means controllable for coupling the output of one of said decoding means ($F_i$) to the input of said control assembly (G) in response to said second selection signal ($S_2$).

2. Counting circuit according to claim 1 in which said control assembly (G) comprises a checking counter (32) the clock input of which receives said decoding signals ($S_D$) and the state of which supplies the common value of said first and second selection signals ($S_1$, $S_2$), in that said first selection means ($L_1$) comprises a first multi-plexer (10) the n inputs of which are coupled to the outputs of the n divider circuits, the control input of which receives said first selection signal ($S_1$) and the output of which is coupled to the input of said counter (12), and in that said second selection means comprises a second multiplexer (30) the n-1 inputs of which are couplet to the outputs of the n-1 decoding means, the control input of which receives said second selection sig-nal ($S_2$) and the output of which supplies said decoding signals ($S_D$).

3. Counting circuit according to claim 1 in which said counter (C) can be controlled for up and down counting in response to the state of a control signal ($S_G$) supplied by said control assembly (G) in synchronism with said selection signals ($S_1$, $S_2$).

0 105 837

Fig.1

Fig.4a

9

Fig. 2a

Fig. 2b

0 105 837

Fig. 3

13

Fig. 4b

Fig.4C